# EUROPÄISCHE PATENTANMELDUNG

(11) **EP 4 744 866 A1**
(43) Veröffentlichungstag der Anmeldung: **20.05.2026**
(21) Anmeldenummer: 24213378.3
(22) Anmeldetag: 15.11.2024
(51) Int. Cl.: B29C 64/153, B22F 10/28, B29C 64/357, B33Y 70/00, B33Y 70/10, C08K 3/36

(54) **AMORPHES SILIZIUMDIOXID IN EINEM AUFBAUMATERIAL ZUM VERBESSERN DER WIEDERVERWENDBARKEIT DES AUFBAUMATERIALS**

(71) Anmelder: EOS GmbH Electro Optical Systems, 82152 Krailling (DE)
(72) Erfinder: GALITZ, Verena, 82152 Krailling (DE); FRANGOV, Stoyan, 81475 München (DE); PATERNOSTER, Stefan, 82346 Andechs (DE); RIEDMANN, Paul, 81667 München (DE); BIRINCI, Soner, 81475 München (DE); MATTHES, Christopher, 80639 München (DE); SESSEG, Jens, 9014 St. Gallen (CH); HARTMANN, Fabian, 81379 München (DE); TUTZSCHKY, Sabine, 82229 Seefeld (DE)
(74) Vertreter: Meissner Bolte Partnerschaft mbB

(57) **Zusammenfassung**

Ein Verfahren zum Aufbereiten eines gealterten Aufbaumaterials aus einem Verfahren zum additiven Herstellen eines dreidimensionalen Objekts, wobei das Verfahren zum Aufbereiten umfasst: Mischen von
i) einem gealterten Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) einem frischen Aufbaumaterial zum additiven Herstellen eines dreidimensionalen Objekts,
wobei ein aufbereitetes Aufbaumaterial zum additiven Herstellen eines dreidimensionalen Objekts gebildet wird,
wobei das gealterte Aufbaumaterial und das frische Aufbaumaterial jeweils ein Polymer enthalten und wobei zumindest das frische Aufbaumaterial ein amorphes Siliziumdioxid enthält, wobei das Verhältnis bezogen auf Gewichtsprozent von gealtertem Aufbaumaterial zu frischem Aufbaumaterial größer als 60:40 beträgt.

## Beschreibung

Die Erfindung betrifft ein Verfahren zum Aufbereiten eines gealterten Aufbaumaterials aus einem Verfahren zum additiven Herstellen eines dreidimensionalen Objekts. Die Erfindung betrifft ferner ein Verfahren zum Herstellen eines dreidimensionalen Objekts. Die Erfindung betrifft ferner die Verwendung von amorphem Siliziumdioxid in einem Aufbaumaterial zum Verbessern der Wiederverwendbarkeit des Aufbaumaterials in einem Verfahren zum additiven Herstellen eines dreidimensionalen Objekts. Die Erfindung betrifft außerdem eine Mischung, umfassend i) ein gealtertes Aufbaumaterial aus einem Verfahren zum additiven Herstellen eines dreidimensionalen Objekts und ii) ein frisches Aufbaumaterial zum additiven Herstellen eines dreidimensionalen Objekts.

Verfahren zum additiven Herstellen dreidimensionaler Objekte gewinnen zunehmend an Bedeutung. Ein solches Verfahren umfasst das Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen.

Als Aufbaumaterial kann ein Polymer, z.B. ein Polyamid, dienen. Das Aufbaumaterial enthält neben dem Polymer häufig einen oder mehrere Zusatzstoffe.

Aufbaumaterial, das im Verfahren nicht verfestigt wird und somit keinen Bestandteil des dreidimensionalen Objekts bildet, wird beim additiven Herstellen dreidimensionaler Objekte abgetrennt. Dieses Aufbaumaterial weist gegenüber frischem Aufbaumaterial, also Aufbaumaterial, das noch nicht in einem Verfahren zum additiven Herstellen dreidimensionaler Objekte verwendet wurde, Alterungsspuren auf und wird auch als gealtertes Aufbaumaterial bezeichnet. Beispielsweise kann das Aufbaumaterial durch die Temperatur im additiven Herstellungsverfahren eine Verlängerung der Polymerketten erfahren.

Aus ökologischen und wirtschaftlichen Gründen gewinnen auch die Wiederverwendbarkeit und Wiederverwendung von Materialien zunehmend an Bedeutung.

Daher werden in Verfahren zum additiven Herstellen dreidimensionaler Objekte auch Mischungen von gealtertem Aufbaumaterial und frischem Aufbaumaterial verwendet. Beispielsweise wird gealtertes Aufbaumaterial aus einem Verfahren zum additiven Herstellen eines dreidimensionalen Objekts durch Mischen mit frischen Aufbaumaterial aufbereitet. Dieses Aufbereiten wird auch Auffrischen genannt. Bislang beträgt das Verhältnis bezogen auf Gewichtsprozent von gealtertem Aufbaumaterial zu frischem Aufbaumaterial maximal 60:40. Wird ein größerer Anteil von gealtertem Aufbaumaterial verwendet, kommt es bei Verwendung herkömmlichen Aufbaumaterials beim additiven Herstellen dreidimensionaler Objekte zu Defekten im Herstellungsverfahren und/oder im dreidimensionalen Objekt.

Bestehendes Aufbaumaterial, bestehende Verfahren zum Aufbereiten eines gealterten Aufbaumaterials aus einem Verfahren zum additiven Herstellen eines dreidimensionalen Objekts und bestehende Verfahren zum Herstellen eines dreidimensionalen Objekts weisen nach wie vor Verbesserungspotenzial hinsichtlich Produktqualität, Effizienz, Kosten, Einsparung von Energie, Einsparung von Ressourcen, Wiederverwendbarkeit und Abfallvermeidung auf. Insbesondere besteht ein Wunsch, das Verhältnis von gealtertem Aufbaumaterial zu frischem Aufbaumaterial beim Auffrischen erhöhen zu können.

Vor diesem Hintergrund besteht eine Aufgabe der vorliegenden Erfindung darin, ein verbessertes Verfahren zum Aufbereiten eines gealterten Aufbaumaterials aus einem Verfahren zum additiven Herstellen eines dreidimensionalen Objekts und ein verbessertes Verfahren zum Herstellen eines dreidimensionalen Objekts anzugeben.

### Zusammenfassung der Erfindung

Aus den Bestrebungen, diese Aufgabe zu lösen, resultiert in einem ersten Aspekt ein Verfahren zum Aufbereiten eines gealterten Aufbaumaterials aus einem Verfahren zum additiven Herstellen eines dreidimensionalen Objekts, wobei das Verfahren zum Aufbereiten ein Mischen von
i) einem gealterten Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) einem frischen Aufbaumaterial zum additiven Herstellen eines dreidimensionalen Objekts,

umfasst, wobei ein aufbereitetes Aufbaumaterial zum additiven Herstellen eines dreidimensionalen Objekts gebildet wird,
wobei das gealterte Aufbaumaterial und das frische Aufbaumaterial jeweils ein Polymer enthalten und wobei zumindest das frische Aufbaumaterial ein amorphes Siliziumdioxid enthält, wobei das Verhältnis bezogen auf Gewichtsprozent von gealtertem Aufbaumaterial zu frischem Aufbaumaterial größer als 60:40 beträgt.

Aus den Bestrebungen, die eingangs genannte Aufgabe zu lösen, resultiert ferner in einem zweiten Aspekt ein Verfahren zum Herstellen eines dreidimensionalen Objekts, umfassend
a) das Verfahren zum Aufbereiten nach dem ersten Aspekt und
b) ein Bereitstellen des aufbereiteten Aufbaumaterials, wobei das Bereitstellen Schicht für Schicht erfolgt, und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen. Das Verfahren kann auch als Verfahren zum additiven Herstellen eines dreidimensionalen Objekts oder als additives Fertigungsverfahren bezeichnet werden.

Aus den Bestrebungen, die eingangs genannte Aufgabe zu lösen, resultiert ferner in einem dritten Aspekt die Verwendung von amorphem Siliziumdioxid in einem Aufbaumaterial zum Verbessern der Wiederverwendbarkeit des Aufbaumaterials in einem Verfahren zum additiven Herstellen eines dreidimensionalen Objekts.

Es wurde festgestellt, dass amorphes Siliziumdioxid in einem Aufbaumaterial überraschenderweise die Eigenschaften, insbesondere die Wiederverwendbarkeit des Aufbaumaterials in einem Verfahren zum additiven Herstellen eines dreidimensionalen Objekts, verbessert. Beispielsweise kann durch die Verwendung von amorphem Siliziumdioxid in dem Aufbaumaterial das Verhältnis bezogen auf Gewichtsprozent von gealtertem Aufbaumaterial zu frischem Aufbaumaterial auf größer als 60:40 gesteigert werden. Dies ist insbesondere auch vorteilhaft, weil amorphes Siliziumdioxid in dem Aufbaumaterial auch als Rieselhilfe dienen kann beziehungsweise dient.

Gegenstand der Erfindung ist in einem vierten Aspekt eine Mischung, umfassend
i) ein gealtertes Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) ein frisches Aufbaumaterial zum additiven Herstellen eines dreidimensionalen Objekts,

wobei das gealterte Aufbaumaterial und das frische Aufbaumaterial jeweils ein Polymer enthalten und wobei zumindest das frische Aufbaumaterial ein amorphes Siliziumdioxid enthält,
wobei das Verhältnis bezogen auf Gewichtsprozent von gealtertem Aufbaumaterial zu frischem Aufbaumaterial größer als 60:40 beträgt.

Gegenstand der Erfindung ist in einem fünften Aspekt ein dreidimensionales Objekt, wobei das Objekt durch ein erfindungsgemäßes Verfahren erhältlich ist.

Gegenstand der Erfindung ist in einem sechsten Aspekt ein aufbereitetes Aufbaumaterial zum additiven Herstellen eines dreidimensionalen Objekts, wobei das aufbereitete Aufbaumaterial durch ein erfindungsgemäßes Verfahren erhältlich ist.

### Ausführliche Beschreibung der Erfindung

Erfindungsgemäß ist ein Verfahren zum Aufbereiten eines gealterten Aufbaumaterials aus einem Verfahren zum additiven Herstellen eines dreidimensionalen Objekts. Mit anderen Worten, das gealterte Aufbaumaterial stammt aus einem Verfahren zum additiven Herstellen eines dreidimensionalen Objekts. Wie eingangs beschrieben weist gealtertes Aufbaumaterial gegenüber frischem Aufbaumaterial, also Aufbaumaterial, das noch nicht in einem Verfahren zum additiven Herstellen dreidimensionaler Objekte verwendet wurde, Alterungsspuren auf. Mit anderen Worten, gealtertes Aufbaumaterial und frisches Aufbaumaterial unterscheiden sich darin, dass das gealterte Aufbaumaterial in einem Verfahren zum additiven Herstellen dreidimensionaler Objekte verwendet wurde und das frische Aufbaumaterial nicht in einem Verfahren zum additiven Herstellen dreidimensionaler Objekte verwendet wurde.

Das Aufbaumaterial ist bevorzugt pulverförmig. Dies gilt sowohl für das frische als auch für das gealterte und das aufbereitete Aufbaumaterial. Das selektive Verfestigen des Aufbaumaterials umfasst ein Schmelzen des Aufbaumaterials durch Einwirkung von elektromagnetischer Strahlung und anschließend ein Erstarren und/oder ein Rekristallisieren des Aufbaumaterials als Bestandteil des dreidimensionalen Objekts.

In einer bevorzugten Ausführungsform enthalten das gealterte Aufbaumaterial und das frische Aufbaumaterial das gleiche Polymer.

In einer bevorzugten Ausführungsform umfasst das Polymer ein Polyamid. In einer bevorzugten Ausführungsform ist das Polymer ein Polyamid. Ein Polyamid ausgewählt aus Polyamid 12, Polyamid 11, Polyamid 6 und Mischungen davon ist bevorzugt. Es wurde festgestellt, dass amorphes Siliziumdioxid insbesondere in einem Aufbaumaterial, das Polyamid enthält, überraschenderweise die Wiederverwendbarkeit des Aufbaumaterials in einem Verfahren zum additiven Herstellen eines dreidimensionalen Objekts verbessert.

Gemäß einer bevorzugten Ausführungsform des Verfahrens zum Herstellen eines dreidimensionalen Objekts wird Aufbaumaterial, das im Verfahren nicht verfestigt wird und somit keinen Bestandteil des dreidimensionalen Objekts bildet, beim additiven Herstellen des dreidimensionalen Objekts abgetrennt. In einer bevorzugten Ausführungsform wird das abgetrennte Aufbaumaterial als gealtertes Aufbaumaterial in einem erfindungsgemäßen Verfahren aufbereitet. In einer bevorzugten Ausführungsform wird das aufbereitete Aufbaumaterial in einem Verfahren zum additiven Herstellen eines dreidimensionalen Objekts verwendet. Ein solches Verfahren kann einen Kreislauf darstellen, wodurch der Ressourcen- und Energieverbrauch sowie Abfallmengen reduziert werden können. Das abgetrennte und gealterte Aufbaumaterial kann also mehrfach wiederverwendet werden.

Die Erfindung ermöglicht eine verbesserte Wiederverwendbarkeit des Aufbaumaterials. Mit anderen Worten, das erfindungsgemäße Verfahren und die erfindungsgemäße Verwendung zeichnen sich durch eine verbesserte Wiederverwendbarkeit des Aufbaumaterials aus. Eine verbesserte Wiederverwendbarkeit zeichnet sich dadurch aus, dass das Verhältnis bezogen auf Gewichtsprozent von gealtertem Aufbaumaterial zu frischem Aufbaumaterial größer als 60:40 beträgt. Beispielsweise kann das Verhältnis bezogen auf Gewichtsprozent von gealtertem Aufbaumaterial zu frischem Aufbaumaterial größer als 60:40 bis höchstens 80:20 betragen. In einer bevorzugten Ausführungsform beträgt das Verhältnis bezogen auf Gewichtsprozent von gealtertem Aufbaumaterial zu frischem Aufbaumaterial zwischen 65:35 und 80:20. In einer weiteren bevorzugten Ausführungsform beträgt das Verhältnis bezogen auf Gewichtsprozent von gealtertem Aufbaumaterial zu frischem Aufbaumaterial zwischen 65:35 und 75:25.

Die erfindungsgemäß bessere Wiederverwendbarkeit zeichnet sich auch dadurch aus, dass ein kontinuierliches Verfahren betrieben werden kann, insbesondere ein kontinuierliches Kreislaufverfahren. Beispielsweise kann das erfindungsgemäße Verfahren derart ausgestaltet sein, dass das Verfahren gemäß zweitem Aspekt ein Abtrennen von Aufbaumaterial, das nicht verfestigt wird, und ein Aufbereiten des abgetrennten, gealterten Aufbaumaterials und die Verwendung des aufbereiteten Aufbaumaterials in einem Verfahren zum additiven Herstellen eines dreidimensionalen Objekts umfasst. Erfindungsgemäß kann so ein Verfahren betrieben werden, bei dem mindestens zwei, bevorzugt mindestens drei, bevorzugter mindestens vier, noch bevorzugter mindestens fünf aufeinanderfolgende Verfahren zum additiven Herstellen eines dreidimensionalen Objekts gemäß zweitem Aspekt durchlaufen werden, wobei das Verhältnis bezogen auf Gewichtsprozent von gealtertem Aufbaumaterial zu frischem Aufbaumaterial jeweils größer als 60:40 beträgt, ohne dass die hergestellten dreidimensionalen Objekte einen Mangel hinsichtlich zumindest eines Parameters ausgewählt aus Oberflächendefektfreiheit, Zugfestigkeit, Bruchdehnung und E-Modul aufweisen und/oder ohne dass im additiven Herstellungsverfahren Störungen auftreten (beispielweise Verklebungen bei der Beschichtung).

Es handelt sich bei dem amorphen Siliziumdioxid in bevorzugten Ausführungsformen um eine pyrogene Kieselsäure. Das amorphe Siliziumdioxid weist bevorzugt eine hydrophobe Oberfläche auf. Insbesondere kann das amorphe Siliziumdioxid in bevorzugten Ausführungsformen eine Oberflächenmodifizierung mit Dimethyldichlorsilan aufweisen. Es wurde festgestellt, dass sich mit amorphem Siliziumdioxid mit entsprechender hydrophober Oberfläche besonders gute Ergebnisse bezüglich Wiederverwendbarkeit des Aufbaumaterials und hinsichtlich zumindest eines Parameters ausgewählt aus Oberflächendefektfreiheit, Zugfestigkeit, Bruchdehnung und E-Modul hergestellter dreidimensionaler Objekte erzielen lassen.

Vorzugsweise weist das amorphe Siliziumdioxid eine BET-Oberfläche zwischen 75 m²/g und 190 m²/g, bevorzugt von mindestens 80 m²/g und/oder höchstens 160 m²/g, besonders bevorzugt von mindestens 90 m²/g und/oder höchstens 140 m²/g, auf. Die BET-Oberfläche kann z.B. nach DIN EN ISO 9277 bestimmt werden. Es wurde festgestellt, dass mit amorphem Siliziumdioxid mit entsprechender BET-Oberfläche besonders gute Ergebnisse bezüglich Wiederverwendbarkeit des Aufbaumaterials und hinsichtlich zumindest eines Parameters ausgewählt aus Oberflächendefektfreiheit, Zugfestigkeit, Bruchdehnung und E-Modul hergestellter dreidimensionaler Objekte erzielen lassen.

Vorzugsweise weist das amorphe Siliziumdioxid eine mittlere Partikelgröße zwischen 1 nm und 50 nm, bevorzugt von mindestens 5 nm und/oder höchstens 35 nm, besonders bevorzugt von mindestens 10 nm und/oder höchstens 20 nm, auf. Bei der mittleren Partikelgröße handelt es sich bevorzugt um die mittlere Partikelgröße d50. Die Partikelgröße kann gemäß ISO 13320-1 (nass) bestimmt werden, z.B. unter Verwendung eines CILAS 1064 Laserbeugungsmessgeräts. Es wurde festgestellt, dass sich mit amorphem Siliziumdioxid mit entsprechender mittlerer Partikelgröße besonders gute Ergebnisse bezüglich Wiederverwendbarkeit des Aufbaumaterials und hinsichtlich zumindest eines Parameters ausgewählt aus Oberflächendefektfreiheit, Zugfestigkeit, Bruchdehnung und E-Modul hergestellter dreidimensionaler Objekte erzielen lassen.

In bevorzugten Ausführungsformen enthält zumindest das frische Aufbaumaterial mindestens 0,01 Gew.-% bis höchstens 0,5 Gew.-% des amorphen Siliziumdioxids. Bevorzugt enthält zumindest das frische Aufbaumaterial mindestens 0,02 Gew.-% oder mindestens 0,03 Gew.-% des amorphen Siliziumdioxids. Bevorzugt enthält zumindest das frische Aufbaumaterial höchstens 0,3 Gew.-% oder höchstens 0,1 Gew.-% des amorphen Siliziumdioxids.

In bevorzugten Ausführungsformen enthält auch das gealterte Aufbaumaterial und/oder das aufbereitete Aufbaumaterial mindestens 0,01 Gew.-% bis 0,5 Gew.-% des amorphen Siliziumdioxids. Bevorzugt enthält auch das gealterte Aufbaumaterial und/oder das aufbereitete Aufbaumaterial mindestens 0,02 Gew.-% oder mindestens 0,03 Gew.-% des amorphen Siliziumdioxids. Bevorzugt enthält auch das gealterte Aufbaumaterial und/oder das aufbereitete Aufbaumaterial höchstens 0,3 Gew.-% oder höchstens 0,1 Gew.-% des amorphen Siliziumdioxids.

Es wurde festgestellt, dass mit amorphem Siliziumdioxid in entsprechenden Mengen besonders gute Ergebnisse bezüglich Verarbeitbarkeit und Wiederverwendbarkeit des Aufbaumaterials sowie hinsichtlich zumindest eines Parameters ausgewählt aus Oberflächendefektfreiheit, Zugfestigkeit, Bruchdehnung und E-Modul hergestellter dreidimensionaler Objekte erzielen lassen.

In einer bevorzugten Ausführungsform erhöht das amorphe Siliziumdioxid im Vergleich zum Aufbaumaterial ohne das amorphe Siliziumdioxid die Rekristallisationstemperatur des Aufbaumaterials um höchstens 4 °C, bevorzugter um höchstens 3 °C, noch bevorzugter um höchstens 2 °C, am bevorzugtesten um höchstens 1 °C. Mit anderen Worten, der Beginn der Rekristallisation beim Abkühlen des Aufbaumaterials liegt höchstens 4 °C, bevorzugter höchstens 3 °C, noch bevorzugter höchstens 2 °C, am bevorzugtesten höchstens 1 °C, höher als beim Aufbaumaterial und/oder dem reinen Polymer ohne das amorphe Siliziumdioxid. Die Rekristallisationstemperatur kann mittels dynamischer Differenzkalorimetrie (Differential Scanning Calorimetry) bestimmt werden, beispielsweise nach DIN EN ISO 11357-3:2018-07. Es wurde festgestellt, dass amorphes Siliziumdioxid die Rekristallisationstemperatur nur in geringfügigem Ausmaß erhöht, was positiv für die Verarbeitbarkeit des Aufbaumaterials mittels additiver Fertigung ist, u.a. da das Sinterfenster erhalten bleibt.

In einer bevorzugten Ausführungsform erfolgt die Verwendung derart, dass ein aus dem Aufbaumaterial additiv hergestelltes, dreidimensionales Objekt gegenüber einem additiv hergestellten, dreidimensionalen Vergleichsobjekt eine Verbesserung hinsichtlich zumindest eines Parameters ausgewählt aus Oberflächendefektfreiheit, Zugfestigkeit, Bruchdehnung und E-Modul aufweist, wobei beide Objekte durch ein Verfahren zum additiven Herstellen eines dreidimensionalen Objekts hergestellt sind, wobei das Verfahren ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei sich das Verfahren zum Herstellen des dreidimensionalen Objekts von dem Verfahren zum Herstellen des Vergleichsobjekts darin unterscheidet, dass das Aufbaumaterial zum Herstellen des Vergleichsobjekts nicht das amorphe Siliziumdioxid enthält, wobei das Aufbaumaterial jeweils eine Mischung ist, umfassend
i) ein gealtertes Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) ein frisches Aufbaumaterial zum additiven Herstellen eines dreidimensionalen Objekts,
wobei das gealterte Aufbaumaterial und das frische Aufbaumaterial jeweils ein Polymer enthalten und gegebenenfalls wobei zumindest das frische Aufbaumaterial ein amorphes Siliziumdioxid enthält, wobei das Verhältnis bezogen auf Gewichtsprozent von gealtertem Aufbaumaterial zu frischem Aufbaumaterial größer als 60:40 beträgt.

Ausführungsformen und Aspekte innerhalb dieser Schrift können beliebig miteinander kombiniert werden, sofern sich aus dem Gegenstand und der Beschreibung der Ausführungsformen und der Aspekte nicht eindeutig Gegenteiliges ergibt. Bevorzugte Ausführungsformen sind auch in den Ansprüchen aufgeführt.

Die Verben "enthalten" und "umfassen" und ihre Konjugationen umfassen auch das Verb "bestehen aus" mit seinen Konjugationen.

Der Begriff "ein" und "eine" stellt keine numerische Begrenzung dar, sondern ist als "mindestens ein" und "mindestens eine" zu verstehen, sofern sich aus dem Kontext nicht eindeutig Gegenteiliges ergibt.

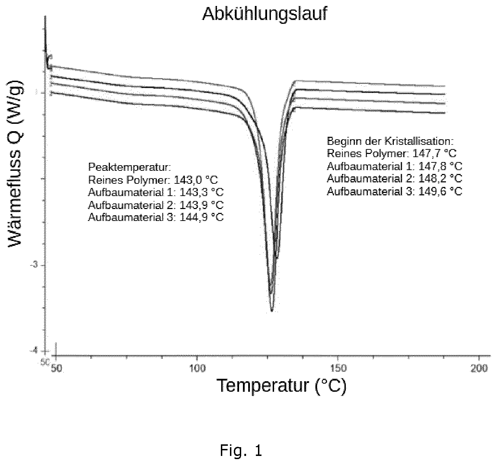

Nachfolgend wird die Erfindung anhand von Beispielen und unter Verweis auf Figuren 1-4 illustriert, wobei die Beispiele und die Figuren nicht beschränkend sein sollen.

In einem Vergleichsbeispiel wurde das pulverförmige Aufbaumaterial 0 verwendet. Es handelt sich um Polyamid 12, versetzt mit 0,05 Gew.-% einer üblichen Rieselhilfe.

Zunächst wurden die pulverförmigen Aufbaumaterialien 1-5 hergestellt. Hierfür wurde pulverförmiges Polyamid 12 mit verschiedenen Typen von pulverförmigem amorphen Siliziumdioxid gemischt. Eine Übersicht über die Aufbaumaterialien 0-5 und die Eigenschaften des verwendeten amorphen Siliziumdioxids ist in Tabelle 1 dargestellt:

**Tabelle 1.**

| | Menge an amorphem Siliziumdioxid (Gew.-%) | BET-Oberfläche des amorphen Siliziumdioxids (m²/g) | Mittlere Partikelgröße des amorphen Siliziumdioxids (nm) | Oberfläche des amorphen Siliziumdioxids | Δ Rekristallisationstemperatur (°C; bezogen auf den Beginn der Rekristallisation im Vergleich zum reinen Polyamid 12) |
|---|---|---|---|---|---|
| Aufbaumaterial 0 (Vergleichsbeispiel) | 0,00 | - | - | - | Nicht bestimmt |
| Aufbaumaterial 1 | 0,05 | 130 | 200-300 | hydrophob durch Dimethyldichlorsilan | + 0,1 |
| Aufbaumaterial 2 | 0,10 | 190 | 14000 | hydrophil | + 0,5 |
| Aufbaumaterial 3 | 0,05 | 200 | 12 | hydrophil | + 1,9 |
| Aufbaumaterial 4 | 0,05 | 170 | 12 | hydrophob durch Dimethyldichlorsilan | Nicht bestimmt |
| Aufbaumaterial 5 | 0,05 | 110 | 10 | hydrophob durch Dimethyldichlorsilan | Nicht bestimmt |

Die Rekristallisationstemperatur wurde mittels dynamischer Differenzkalorimetrie nach DIN EN ISO 11357-3:2018-07 exemplarisch an frischem Aufbaumaterial 1-3 bestimmt. Es zeigte sich nur eine geringe Erhöhung durch das amorphe Siliziumdioxid. Die Ergebnisse sind in Tabelle 1 und in Fig. 1 dargestellt. Beim reinen Polyamid 12 begann die Rekristallisation bei 147,7 °C. Keine oder nur eine geringfügige Veränderung der Rekristallisationstemperatur ist vorteilhaft, damit ein ausreichend großes Sinterfenster bestehen bleibt.

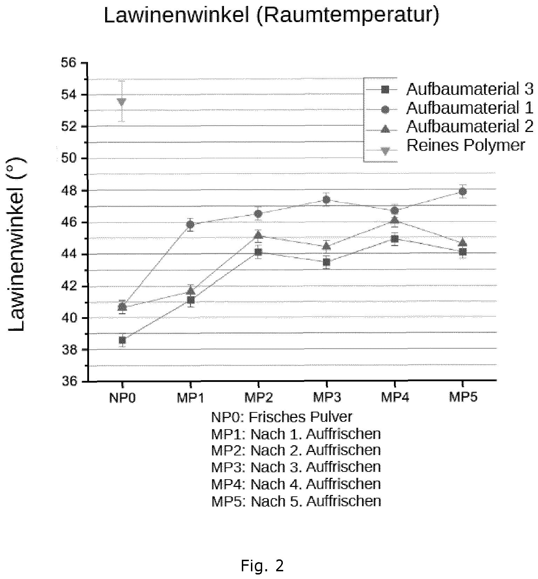

An frischem Aufbaumaterial 1-3 wurde exemplarisch das Fließverhalten bei Raumtemperatur mittels Bestimmung des Lawinenwinkels ("avalanche angle") gemessen. Dies erfolgte an frischem Pulver sowie nach aufeinanderfolgenden Zyklen, jeweils umfassend ein additives Herstellungsverfahren und ein Auffrischen des gealterten Aufbaumaterials. So wurde das frische Aufbaumaterial sowie aufbereitetes Aufbaumaterial nach dem 1., 2., 3., 4. und 5. Auffrischen analysiert. Das Ergebnis ist in Fig. 2 dargestellt. Je größer der Lawinenwinkel, desto schlechter die Fließfähigkeit.

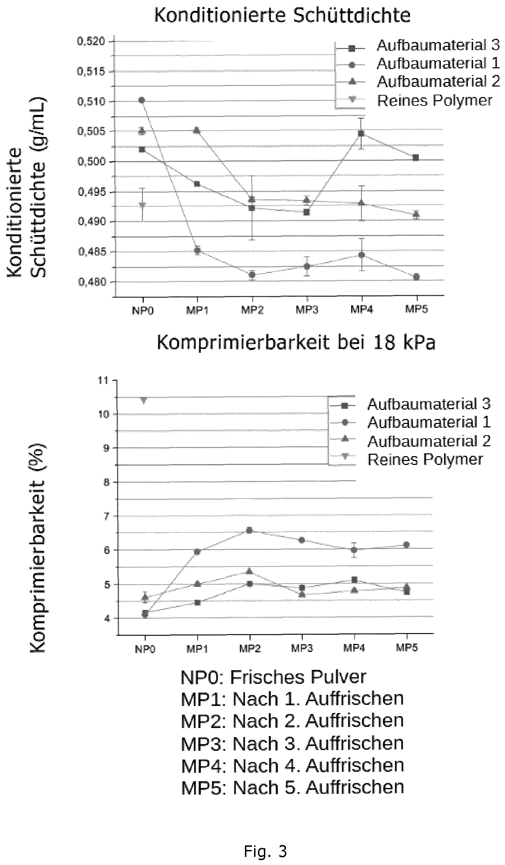

An frischem Aufbaumaterial 1-3 wurde ferner exemplarisch die Komprimierbarkeit nach folgendem Verfahren bestimmt: Das Pulver wurde in einer bestimmten Höhe mit einem Prüfglas abgeschert, so dass eine ebene und homogene Pulveroberfläche entstand. Anschließend übte ein Stempel eine Normalkraft auf die Pulveroberfläche aus, wodurch das Pulver komprimiert wurde. Dieser Vorgang wurde in 10 Schritten durchgeführt, beginnend mit einer Anfangskraft von 0,5 kPa bis zu einer maximalen Normalkraft von 18 kPa. Die Ergebnisse dieser Methode umfassen die "konditionierte Schüttdichte" des Pulvers und die "Komprimierbarkeit bei 18 kPa", die als Grad der Verdichtung des Pulvers bei 18 kPa definiert ist und als prozentuale Volumenänderung ausgedrückt wurde. Das Verfahren erfolgte an frischem Pulver, sowie an dem aufbereiteten Aufbaumaterial nach dem 1., 2., 3., 4. und 5. Auffrischen. Das Ergebnis ist in Fig. 3 dargestellt.

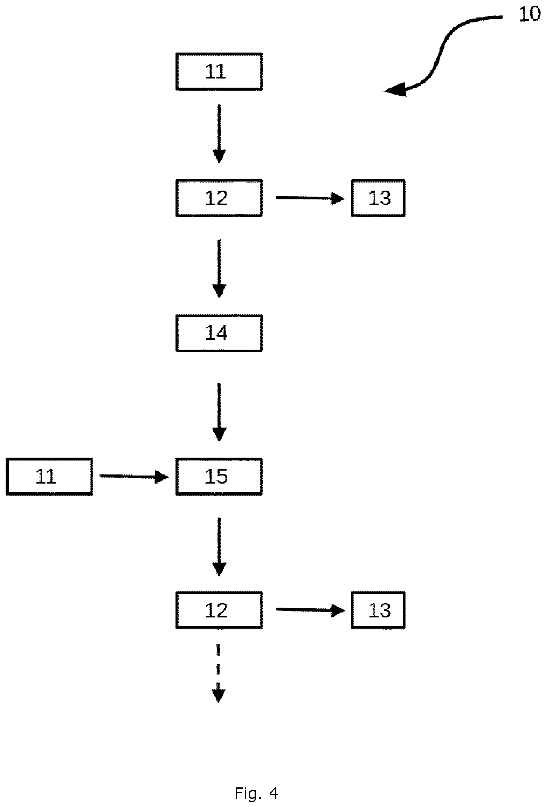

Fig. 4 ist eine schematische Übersicht einer erfindungsgemäßen Verwendung sowie eines erfindungsgemäßen Verfahrens 10, umfassend ein additives Herstellen 12 eines dreidimensionalen Objekts 13, ein Aufbereiten 15 von gealtertem Aufbaumaterial 14 und ein weiteres additives Fertigungsverfahren 12. Die Erfindung ist hierauf aber nicht beschränkt, sondern kann auch nur das Aufbereiten 15 oder ein Verfahren mit mehreren Zyklen, jeweils umfassend ein additives Fertigungsverfahren 12 und ein Aufbereiten 15, umfassen.

Die pulverförmigen Aufbaumaterialien 0-5 werden jeweils als frisches Aufbaumaterial 11 in einem additiven Herstellungsverfahren 12 zur Herstellung eines dreidimensionalen Objekts 13 eingesetzt. Mit anderen Worten, das entsprechende frische Aufbaumaterial 11 wird Schicht für Schicht bereitgestellt und selektiv Schicht für Schicht durch Einwirkung von elektromagnetischer Strahlung, welche von einer Strahlungsquelle ausgesandt wird, an Positionen in jeder Schicht, die dem Querschnitt des Objekts 13 in dieser Schicht entsprechen, verfestigt.

Aufbaumaterial 14, das nicht verfestigt wird und somit kein Bestandteil des additiv gefertigten, dreidimensionalen Objekts 13 bildet, wird abgetrennt. Da das Material 14 durch die thermische Belastung im vorangehenden additiven Fertigungsverfahren 12 veränderte Eigenschaften aufweist, gilt es als gealtert und muss zur Wiederverwendung aufbereitet werden. Die Aufbereitung 15 erfolgt durch Mischen des gealterten Aufbaumaterials 14 mit frischem Aufbaumaterial 11 in einem Verhältnis bezogen auf Gewichtsprozent von gealtertem Aufbaumaterial 14 zu frischem Aufbaumaterial 11 von 70:30. Es wird jeweils das gealterte Aufbaumaterial 14 mit entsprechendem, frischem Aufbaumaterial 11 gemischt (d.h. gealtertes Aufbaumaterial 0 mit frischem Aufbaumaterial 0, gealtertes Aufbaumaterial 1 mit frischem Aufbaumaterial 1, gealtertes Aufbaumaterial 2 mit frischen Aufbaumaterial 2, etc.). So wird aufbereitetes Aufbaumaterial erhalten.

Das entsprechend aufbereitete Aufbaumaterial wird dann wieder in einem additiven Herstellungsverfahren 12 zur Herstellung eines dreidimensionalen Objekts 13 eingesetzt. Aufbaumaterial 14, das nicht verfestigt wird und somit keinen Bestandteil des additiv gefertigten, dreidimensionalen Objekts 13 bildet, wird wieder abgetrennt, aufbereitet und erneut der additiven Fertigung 12 zugeführt.

Um die Robustheit des Verfahrens auch über mehrere Zyklen (jeweils umfassend eine additive Fertigung 12 und ein Auffrischen 15) zu testen, wurde das in Fig. 4 gezeigte Verfahren fortgeführt, wie durch den gestrichelten Pfeil angedeutet. Zunächst wurde also jeweils ein dreidimensionales Bauteil 13 aus 100 % frischem Aufbaumaterial 0-5 hergestellt. Dann folgten fünf Zyklen, jeweils umfassend ein Aufbereiten 15 ("Auffrischen") des gealterten Aufbaumaterials 14 mit dem entsprechenden frischen Aufbaumaterial 11 sowie eine additive Fertigung 12.

Die additiven Fertigungsverfahren 12 wurden jeweils gleichermaßen ausgeführt, mit dem Ziel, dass alle gefertigten bzw. zu fertigenden Objekte 13 jeweils dieselbe dreidimensionale Form aufweisen. U.a. wurden Verzugsrahmen sowie Bauteile gemäß DIN EN ISO 527-2:2012-06 (Probekörper 1A sowie 1B) gefertigt.

Die gefertigten Objekte wurden auf Oberflächendefekte hin untersucht. Die Ergebnisse sind in Tabelle 2 dargestellt:

**Tabelle 2.**

| | Auftreten von Oberflächendefekten | Intensität der Oberflächendefekte |
|---|---|---|
| Aufbaumaterial 0 (Vergleichsbeispiel) | Nach 1. Auffrischen | stark |
| Aufbaumaterial 1 | Keine | Keine |
| Aufbaumaterial 2 | Nach 3. Auffrischen | stark |
| Aufbaumaterial 3 | Nach 2. Auffrischen | stark |
| Aufbaumaterial 4 | Nach 3. Auffrischen | sehr leicht |
| Aufbaumaterial 5 | Keine | Keine |

Der Versuch zeigt, dass das Aufbaumaterial mit amorphem Siliziumdioxid mehrfach wieder mit frischem Aufbaumaterial in einem Verhältnis bezogen auf Gewichtsprozent von gealtertem Aufbaumaterial zu frischem Aufbaumaterial größer als 60:40 aufgefrischt und erneut in additiven Herstellungsverfahren eingesetzt werden kann, ohne dass Oberflächendefekte auftreten. Besonders vorteilhaft waren diesbezüglich Aufbaumaterialien 1 und 5. Bei Aufbaumaterial 0 war ein Auffrischen mit einem Verhältnis von gealtertem Aufbaumaterial zu frischem Aufbaumaterial von größer als 60:40 (bezogen auf Gewichtsprozent) nicht erfolgreich.

### Bezugszeichenliste

- 10: Erfindungsgemäßes Verfahren
- 11: Frisches Aufbaumaterial
- 12: Additives Herstellen eines dreidimensionalen Objekts
- 13: dreidimensionales Objekt
- 14: Gealtertes Aufbaumaterial
- 15: Aufbereiten des gealterten Aufbaumaterials

## Patentansprüche

1. Verfahren zum Aufbereiten eines gealterten Aufbaumaterials aus einem Verfahren zum additiven Herstellen eines dreidimensionalen Objekts, wobei das Verfahren zum Aufbereiten umfasst:
Mischen von
i) einem gealterten Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) einem frischen Aufbaumaterial zum additiven Herstellen eines dreidimensionalen Objekts,
wobei ein aufbereitetes Aufbaumaterial zum additiven Herstellen eines dreidimensionalen Objekts gebildet wird,
wobei das gealterte Aufbaumaterial und das frische Aufbaumaterial jeweils ein Polymer enthalten und wobei zumindest das frische Aufbaumaterial ein amorphes Siliziumdioxid enthält, wobei das Verhältnis bezogen auf Gewichtsprozent von gealtertem Aufbaumaterial zu frischem Aufbaumaterial größer als 60:40 beträgt.

2. Verfahren zum Herstellen eines dreidimensionalen Objekts, umfassend a) das Verfahren zum Aufbereiten nach dem vorherigen Anspruch und b) ein Bereitstellen des aufbereiteten Aufbaumaterials, wobei das Bereitstellen Schicht für Schicht erfolgt, und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen.

3. Verfahren nach dem vorherigen Anspruch,
**dadurch gekennzeichnet, dass**
das Aufbaumaterial, das nicht verfestigt wird, abgetrennt wird und als gealtertes Aufbaumaterial in einem Verfahren nach einem der vorherigen Ansprüche aufbereitet wird und optional in einem Verfahren zum additiven Herstellen eines dreidimensionalen Objekts verwendet wird.

4. Verfahren nach einem der vorherigen Ansprüche,
**dadurch gekennzeichnet, dass**
das Verhältnis bezogen auf Gewichtsprozent von gealtertem Aufbaumaterial zu frischem Aufbaumaterial zwischen 65:35 und 80:20 beträgt.

5. Verfahren nach einem der vorherigen Ansprüche,
**dadurch gekennzeichnet, dass**
das amorphe Siliziumdioxid eine hydrophobe Oberfläche aufweist.

6. Verfahren nach einem der vorherigen Ansprüche,
**dadurch gekennzeichnet, dass**
das amorphe Siliziumdioxid eine Oberflächenmodifizierung mit Dimethyldichlorsilan aufweist.

7. Verfahren nach einem der vorherigen Ansprüche,
**dadurch gekennzeichnet, dass**
das amorphe Siliziumdioxid eine BET-Oberfläche zwischen 75 m²/g und 190 m²/g, bevorzugt von mindestens 80 m²/g und/oder höchstens 160 m²/g, besonders bevorzugt von mindestens 90 m²/g und/oder höchstens 140 m²/g, aufweist.

8. Verfahren nach einem der vorherigen Ansprüche,
**dadurch gekennzeichnet, dass**
das amorphe Siliziumdioxid eine mittlere Partikelgröße zwischen 1 nm und 50 nm, bevorzugt von mindestens 5 nm und/oder höchstens 35 nm, besonders bevorzugt von mindestens 10 nm und/oder höchstens 20 nm, aufweist.

9. Verfahren nach einem der vorherigen Ansprüche,
**dadurch gekennzeichnet, dass**
zumindest das frische Aufbaumaterial mindestens 0,01 Gew.-% bis 0,5 Gew.-%, bevorzugt mindestens 0,02 Gew.-% und/oder höchstens 0,3 Gew.-%, besonders bevorzugt mindestens 0,03 Gew.-% und/oder höchstens 0,1 Gew.-%, des amorphen Siliziumdioxids enthält.

10. Verfahren nach einem der vorherigen Ansprüche,
**dadurch gekennzeichnet, dass**
das gealterte Aufbaumaterial und das frische Aufbaumaterial dasselbe Polymer enthalten.

11. Verfahren nach einem der vorherigen Ansprüche,
**dadurch gekennzeichnet, dass**
das Polymer ein Polyamid umfasst, bevorzugt ein Polyamid ausgewählt aus Polyamid 12, Polyamid 11, Polyamid 6 und Mischungen davon.

12. Verwendung von amorphem Siliziumdioxid in einem Aufbaumaterial zum Verbessern der Wiederverwendbarkeit des Aufbaumaterials in einem Verfahren zum additiven Herstellen eines dreidimensionalen Objekts.

13. Verwendung nach dem vorherigen Anspruch,
**dadurch gekennzeichnet, dass**
das amorphe Siliziumdioxid die Rekristallisationstemperatur des Aufbaumaterials um höchstens 4 °C erhöht.

14. Verwendung nach einem der vorherigen Ansprüche,
**dadurch gekennzeichnet, dass**
ein aus dem Aufbaumaterial additiv hergestelltes, dreidimensionales Objekt gegenüber einem additiv hergestellten, dreidimensionalen Vergleichsobjekt eine Verbesserung hinsichtlich zumindest eines Parameters ausgewählt aus Oberflächendefektfreiheit, Zugfestigkeit, Bruchdehnung und E-Modul aufweist, wobei beide Objekte durch ein Verfahren zum additiven Herstellen eines dreidimensionalen Objekts hergestellt sind, wobei das Verfahren ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei sich das Verfahren zum Herstellen des dreidimensionalen Objekts von dem Verfahren zum Herstellen des Vergleichsobjekts darin unterscheidet, dass das Aufbaumaterial zum Herstellen des Vergleichsobjekts nicht das amorphe Siliziumdioxid enthält, wobei das Aufbaumaterial jeweils eine Mischung ist, umfassend
i) ein gealtertes Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) ein frisches Aufbaumaterial zum additiven Herstellen eines dreidimensionalen Objekts,
wobei das gealterte Aufbaumaterial und das frische Aufbaumaterial jeweils ein Polymer enthalten und gegebenenfalls wobei zumindest das frische Aufbaumaterial ein amorphes Siliziumdioxid enthält, wobei das Verhältnis bezogen auf Gewichtsprozent von gealtertem Aufbaumaterial zu frischem Aufbaumaterial größer als 60:40 beträgt.

15. Mischung, umfassend
i) ein gealtertes Aufbaumaterial aus einem Verfahren zum additiven Herstellen eines dreidimensionalen Objekts, wobei das Verfahren zum additiven Herstellen eines dreidimensionalen Objekts ein Bereitstellen eines Aufbaumaterials Schicht für Schicht und ein selektives Verfestigen des Aufbaumaterials Schicht für Schicht durch Einwirkung von elektromagnetischer Strahlung, welche von einer Strahlungsquelle ausgesandt wird, an Positionen in jeder Schicht, die dem Querschnitt des Objekts in dieser Schicht entsprechen, umfasst, wobei das Aufbaumaterial, das nicht verfestigt wird, abgetrennt wird und das gealterte Aufbaumaterial bildet, und
ii) ein frisches Aufbaumaterial zum additiven Herstellen eines dreidimensionalen Objekts,
wobei das gealterte Aufbaumaterial und das frische Aufbaumaterial jeweils ein Polymer enthalten und wobei zumindest das frische Aufbaumaterial ein amorphes Siliziumdioxid enthält,
wobei das Verhältnis bezogen auf Gewichtsprozent von gealtertem Aufbaumaterial zu frischem Aufbaumaterial größer als 60:40 beträgt.
